# EUROPÄISCHE PATENTANMELDUNG

(11) **EP 3 712 985 A1**
(43) Veröffentlichungstag der Anmeldung: **23.09.2020**
(21) Anmeldenummer: 19163974.9
(22) Anmeldetag: 20.03.2019
(51) Int. Cl.: H01M 2/26, H01M 2/22, B23K 26/00, H01M 10/04

(54) **VERFAHREN ZUR HERSTELLUNG EINER BATTERIEZELLE**

(71) Anmelder: Manz AG, 72768 Reutlingen (DE)
(72) Erfinder: Schaupp, Martin, 72764 Reutlingen (DE); Koohi, Roya, 85622 Feldkirchen (DE)
(74) Vertreter: Kohler Schmid Möbus Patentanwälte

(57) **Zusammenfassung**

Ein Verfahren zur Herstellung einer Batteriezelle (10) umfasst die Verfahrensschritte:
a. Bilden eines Stapels aus Anodenblättern (12), Separatorblättern (14) und Kathodenblättern (16), wobei den Anodenblättern (12) erste Stromleiter (18) und den Kathodenblättern (16) zweite Stromleiter (20) zugeordnet sind;
b. Anordnen eines Opfermaterials (62) auf der Oberseite und/oder der Unterseite eines Stapels von ersten Stromleitern (18) und/oder des Stapels von zweiten Stromleitern (20);
c. Verschweißen des Opfermaterials (62) mit den ersten und/oder zweiten Stromleitern (18, 20) mittels eines Lasers.

## Beschreibung

Die Erfindung betrifft ein Verfahren zur Herstellung einer Batteriezelle, wobei ein Stapel aus Anodenblättern, Separatorblättern und Kathodenblättern gebildet wird, wobei den Anodenblättern erste Stromleiter und den Kathodenblättern zweite Stromleiter zugeordnet sind.

Es besteht die grundsätzliche Anforderung, Energiespeicher mit einer erhöhten Energiedichte und Aufnahmekapazität bereitzustellen. Batteriezellen werden üblicherweise dadurch hergestellt, dass Anodenblätter, Kathodenblätter und dazwischen angeordnete Separatoren gestapelt werden und anschließend die zugeordneten Stromleiter der Anodenblätter und Kathodenblätter jeweils verschweißt werden.

Dabei ist es zum einen bekannt, Widerstandsschweißen zu verwenden. Nachteilig am Widerstandsschweißen ist, dass nur Werkstücke mit einem relativ geringen Volumen miteinander verschweißt werden können. Somit besteht eine Limitierung hinsichtlich der Anzahl von Lagen, die gestapelt werden können.

Weiterhin ist es bekannt, die Stromleiter durch Ultraschallschweißen zu verbinden. Dazu ist es notwendig, die Stromleiter zusammenzupressen. Beim Ultraschallschweißen können Partikel entstehen, die die Funktionsfähigkeit der Batteriezelle beeinträchtigen. Außerdem ist auch das Ultraschallschweißen hinsichtlich der Anzahl von Lagen, die miteinander verschweißt werden können, beschränkt.

Es ist auch bekannt, die Stromleiter mittels Laserschweißen zu verbinden. Dabei muss jedoch darauf geachtet werden, dass zwischen den Stromleitern kein Luftspalt besteht. Daher ist es bekannt, die Stromleiter durch eine Klemmeinrichtung, die Teil der Lasermaschine ist, oder durch eine separate Klemmeinrichtung zusammenzuhalten und anschließend zu verschweißen. Probleme bestehen unter anderem auch dadurch, dass das Niederhalten der Stromleiter und das Schweißen an derselben Stelle erfolgen sollte, was jedoch nicht möglich ist, wenn es sich bei der Klemmvorrichtung um eine externe Vorrichtung oder auch eine Vorrichtung der Lasermaschine handelt. Außerdem verschleißt die Klemmvorrichtung.

Aufgabe der vorliegenden Erfindung ist es daher, ein Verfahren bereitzustellen, mit dem eine Batteriezelle vereinfacht hergestellt werden kann und bei der es weniger Limitationen hinsichtlich der Stapeldicke gibt.

Gelöst wird diese Aufgabe erfindungsgemäß durch ein Verfahren zur Herstellung einer Batteriezelle mit den Verfahrensschritten:
a. Bilden eines Stapels aus Anodenblättern, zumindest einem Separatorblatt und Kathodenblättern, wobei den Anodenblättern erste Stromleiter und den Kathodenblättern zweite Stromleiter zugeordnet sind;
b. Anordnen eines Opfermaterials auf der Oberseite und/oder der Unterseite eines Stapels von ersten Stromleitern und/oder des Stapels von zweiten Stromleitern;
c. Verschweißen des Opfermaterials mit den ersten und/oder zweiten Stromleitern mittels eines Lasers.

Das Opfermaterial wird zusammen mit den Stromleitern verschweißt und verbleibt an der Batteriezelle. Durch diese Maßnahme sind verschiedene Vorteile zu erreichen. Der Schweißprozess kann mit einer hohen Präzision durchgeführt werden. Anders als beim Ultraschallschweißen entstehen keine Partikel, die die Funktionsfähigkeit der Batteriezelle beeinträchtigen könnten bzw. können leichter abgesaugt werden. Der Laserschweißprozess ist (nahezu) verschleißfrei. Es entsteht eine stoffschlüssige Verbindung mit einer hohen mechanischen Stabilität. Die Schweißnaht kann mit einer großen Gleichförmigkeit hergestellt werden. Insbesondere können die Stromleiter vollständig durchgeschweißt werden.

Durch die Verwendung eines Opfermaterials entsteht ein größeres Prozessfenster. Das Opfermaterial kann ein einfaches Blech sein. Insbesondere kann das Opfermaterial metallisch sein.

Es können mehrere Separatorblätter vorgesehen sein oder ein Z-förmig gefaltetes oder gewickeltes Separatorblatt.

Das erfindungsgemäße Verfahren ist einsetzbar für Batteriestapel bzw. Anzahl von Stromleitern die deutlich über 50 liegen. Dadurch ist es möglich, Batteriezellen herzustellen, die eine deutlich höhere Energiedichte und Kapazität aufweisen, als bisher bekannte Batteriezellen.

Die ersten und/oder zweiten Stromleiter können jeweils mit zumindest einer Klemme kraft- und/oder formschlüssig festgehalten werden und die zumindest eine Klemme kann mit den von dieser kraft- und/oder formschlüssig festgehaltenen Stromleitern mittels des Lasers verschweißt werden, wobei die Klemme zumindest teilweise das Opfermaterial ist.
Es ist demnach vorgesehen, dass anstelle einer stationären Klemmvorrichtung eine Klemme verwendet wird, die die Stromleiter zusammenhält. Zum einen kann dadurch erreicht werden, dass zwischen den einzelnen Stromleitern kein Luftspalt entsteht. Dadurch wird der Schweißprozess positiv beeinflusst. Außerdem kann an der gleichen Stelle kraft- und/oder formschlüssig festgehalten und geschweißt werden. Die kraft- und/oder formschlüssig festgehaltenen Stromleiter können der Lasermaschine schweißbereit zugeführt werden und die Lasermaschine kann besser ausgelastet werden.

Die ersten und/oder zweiten Stromleiter können mittels Crimpen mit dem Opfermaterial verbunden werden. Das Opfermaterial kann dabei als Klemme oder Hülse ausgebildet sein.

Weitere Vorteile ergeben sich, wenn die ersten Stromleiter und/oder die zweiten Stromleiter jeweils durch zwei Klemmen kraft- und/oder formschlüssig festgehalten werden und jede Klemme mit den jeweiligen Stromleitern mittels eines Lasers verschweißt wird. Wenn zwei Klemmen verwendet werden, kann es unter Umständen einfacher sein, die Stromleiter zwischen den Klemmen kraft- und/oder formschlüssig festzuhalten, da nicht eine einzelne Klemme um den gesamten Stromleiterstapel gelegt werden muss. Außerdem wird eine erhöhte Stabilität erreicht, wenn zwei Klemmen verwendet werden, wobei jede Klemme mit den Stromleitern mittels eines Lasers verschweißt ist.

Grundsätzlich ist es jedoch auch denkbar, nur eine Klemme zu verwenden und auch diese eine Klemme an zwei Stellen mit den Stromleitern zu verschweißen.

Die Klemmen können akkurat hergestellt und in der Lasermaschine ausgerichtet werden.

Gemäß einer bevorzugten Verfahrensvariante kann vorgesehen sein, dass eine Anschlussfahne im Bereich des Opfermaterials angeordnet wird, insbesondere mit den ersten oder zweiten Stromleitern kraft- und/oder formschlüssig festgehalten wird, und gemeinsam mit dem Opfermaterial, insbesondere der Klemme, und den jeweiligen Stromleitern verschweißt wird. Somit kann ein Arbeitsschritt gespart werden und muss nicht nachträglich noch eine Anschlussfahne an die zusammengeschweißten Stromleiter angeschlossen werden. Die Anschlussfahne kann durch das Opfermaterial bzw. die Klemme schon richtig in Bezug auf die Stromleiter positioniert werden. Die Batteriezelle kann somit über das Opfermaterial bzw. die Klemme(n) kontaktiert werden. Außerdem ist es denkbar, dass die Anschlussfahne zumindest teilweise das Opfermaterial darstellt.

Die Qualität der Schweißnaht kann erhöht werden, wenn der Laser und der Stapel während des Schweißens relativ zueinander bewegt werden, insbesondere kreisförmig bewegt werden. Dadurch entsteht eine Schweißnaht mit einer größeren Fläche, die im Wesentlichen kreisförmig ausgebildet ist. Durch die Relativbewegung kann die Tiefe und der Durchmesser der Schweißung moduliert werden. Der Durchmesser der Schweißung und die Geschwindigkeit der Relativbewegung kann eingestellt werden.

Bei einer weiteren Verfahrensvariante kann vorgesehen sein, dass das Laserschweißen derart erfolgt, dass die Temperatur im Bereich der Schweißstelle unter einer vorgegebenen Temperatur bleibt. Dadurch kann eine temperaturbedingte Beschädigung der Anodenblätter und Kathodenblätter und damit der gesamten Batteriezelle vermieden werden.

Ein gleichförmiger Prozess und damit eine gleichbleibende Qualität der Schweißung kann dadurch erreicht werden, dass der Stapel während des Schweißens gekühlt wird. Somit kann für konstante Prozessbedingungen und insbesondere immer gleiche Startbedingungen gesorgt werden. Insbesondere kann die Auflage, auf die der Stapel oder zumindest die Stromleiter während des Schweißens aufgelegt werden, gekühlt werden. Die Kühlung kann beispielsweise mittels eines Fluid durchströmten Körpers erfolgen.

Besondere Vorteile ergeben sich, wenn der Stapel aus mehr als 50 Blättern gebildet wird. Dadurch kann eine Batteriezelle geschaffen werden, die eine hohe Kapazität und Energiedichte aufweist.

Um eine zuverlässige Verbindung der Stromleiter sicherzustellen, kann vorgesehen sein, dass sowohl die Stromleiter der Anodenblätter, als auch die Stromleiter der Kathodenblätter an zumindest zwei Stellen geschweißt werden.

Um die Prozessqualität zu überwachen, kann es vorteilhaft sein, wenn der Laserschweißprozess überwacht wird. Beispielsweise kann das Prozesslicht optisch überwacht werden und daraus auf die Qualität der Schweißung geschlossen werden.

In den Rahmen der Erfindung fällt außerdem eine Batteriezelle mit einem Stapel, der aus Anodenblättern, Kathodenblättern und zumindest einem Separatorblatt gebildet ist, wobei den Anodenblättern erste Stromleiter und den Kathodenblättern zweite Stromleiter zugeordnet sind, wobei im Bereich der ersten Stromleiter und/oder der zweiten Stromleiter zumindest ein Opfermaterial vorgesehen ist und das Opfermaterial mit den Stromleitern laserverschweißt ist. Insbesondere können die ersten und/oder die zweiten Stromleiter jeweils durch zumindest eine Klemme kraft- und/oder formschlüssig festgehalten und die zumindest eine Klemme mit den Stromleitern laserverschweißt sein. Bei einer solchen Batteriezelle werden die Stromleiter nicht nur durch eine Schweißnaht zusammengehalten, sondern auch durch die, insbesondere gecrimpte, Klemme selbst. Die Herstellung einer solchen Batteriezelle ist deutlich vereinfacht, da die Batteriezelle zusammen mit der oder den Klemmen einer Schweißstation zugeführt werden kann. Es muss keine separate Klemmung erfolgen. Die Batteriezellen können extern für das Schweißen vorbereitet werden, indem die Klemme um die Stromleiter positioniert wird. Somit können Laserschweißstationen besser ausgenutzt werden, da nicht vor jedem einzelnen Schweißvorgang zunächst die Stromleiter zusammengepresst werden müssen.

Eine zuverlässige Kontaktierung kann erreicht werden, wenn die zumindest eine Klemme die Stromleiter an zwei Klemmstellen kraft- und/oder formschlüssig festhält. Dabei kann zumindest eine Klemme für die Stromleiter der Kathodenblätter und zumindest eine Klemme für die Stromleiter der Anodenblätter vorgesehen sein. Jede der Klemmen kann die jeweiligen Stromleiter an zwei Klemmstellen kraft- und/oder formschlüssig festhalten. Somit kann die Klemme die Stromleiter umfangsmäßig nahezu vollständig umgeben.

Gemäß einer Weiterbildung kann eine Anschlussfahne mit den Stromleitern der Anodenblätter oder der Kathodenblätter verschweißt sein. So ist auch eine sichere Halterung der Anschlussfahne an den Stromleitern sichergestellt. Außerdem kann die Anschlussfahne gemeinsam mit dem Opfermaterial, insbesondere der Klemme, an den Stromleitern angebracht werden und die Verbindung von Anschlussfahne, Opfermaterial und Stromleitern kann in einem einzigen Prozessschritt während des Laserschweißens erfolgen. Dabei kann die Anschlussfahne zumindest teilweise als Opfermaterial ausgebildet sein.

Die Klemme kann schmetterlingsförmig ausgebildet sein. Somit ist es möglich, zwei Klemmstellen besonders einfach zu realisieren.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung in verschiedenen Stadien der Benutzung dargestellt und in der nachfolgenden Beschreibung näher erläutert.

Es zeigen:
- Fig. 1: eine schematische Darstellung einer Batteriezelle;
- Fig. 2: eine Ansicht auf einen Stapel von Stromleitern, die durch zwei Klemmen kraft- und/oder formschlüssig festgehalten sind;
- Fig. 3: eine Ansicht von vorne auf einen Stapel von Stromleitern, die durch eine einzige Klemme kraft- und/oder formschlüssig festgehalten sind;
- Fig. 4: eine Darstellung von Stromleitern, die über eine Klemme kraft- und/oder formschlüssig festgehalten sind und gemeinsam mit einer Anschlussfahne verschweißt sind.
- Fig. 5a: eine Ansicht auf einen Stapel von Stromleitern, die durch eine alternative Ausführungsform von Klemmen kraft- und/oder formschlüssig festgehalten sind;
- Fig. 5b: die Darstellung gemäß Fig. 5a nach dem Schweißen;
- Fig. 6a: eine Ansicht auf einen Stapel von Stromleitern, auf den ein Opfermaterial aufgebracht wurde;
- Fig. 6b: die Ansicht gemäß Fig. 6a nach dem Schweißen;
- Fig. 7 - 20: Darstellungen zur Erläuterung der Herstellung einer Batteriezelle.

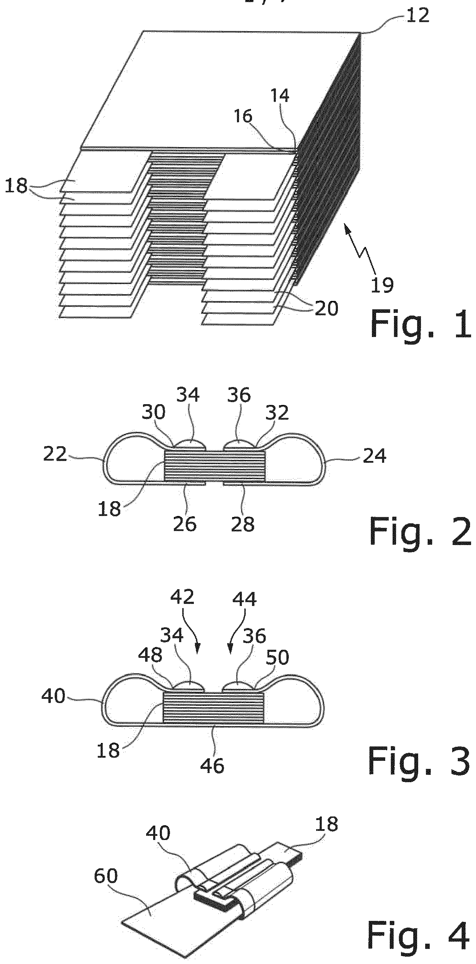

Die Figur 1 zeigt eine Batteriezelle 10, die aus einem Stapel aus Anodenblättern 12, Separatoren 14 und Kathodenblättern 16 gebildet ist. Ein Separator 14 ist stets zwischen Anodenblatt 12 und Kathodenblatt 16 vorgesehen. Zur elektrischen Kontaktierung der Anodenblätter 12 sind erste Stromleiter 18 und zur Kontaktierung der Kathodenblätter 16 sind zweite Stromleiter 20 vorgesehen. Die ersten Stromleiter 18 müssen verschweißt werden und die zweiten Stromleiter 20 müssen ebenfalls verschweißt werden.

In der Figur 2 ist eine Draufsicht auf die ersten Stromleiter 18 gezeigt. Die ersten Stromleiter 18 sind durch eine erste Klemme 22 und durch eine zweite Klemme 24 kraft- und/oder formschlüssig festgehalten. Die Klemmen 22, 24 greifen jeweils mit einem Schenkel 26, 28 an der Unterseite des aus den Stromleitern 18 gebildeten Stapels und mit jeweils einem Schenkel 30, 32 an der Oberseite des aus den Stromleitern 18 gebildeten Stapels an und drückt die Stromleiter 18 zusammen, sodass kein Luftspalt zwischen den einzelnen Stromleitern 18 verbleibt. Die Klemmen 22, 24 stehen unter einer Vorspannung, sodass keine weitere externe Kraft benötigt wird, um die Stromleiter 18 zusammenzudrücken. Weiterhin sind Schweißstellen 34, 36 zu erkennen. Die Stromleiter 18 sind über die Schweißstellen 34,38 mit den Klemmen 22, 24 verschweißt. Die Klemmen 22, 24 verbleiben somit nach dem Schweißprozess an den Stromleitern 18. Die Schenkel 26, 28, 30, 32 stellen ein Opfermaterial für den Schweißprozess dar.

Die Figur 3 weist gegenüber der Figur 2 den Unterschied auf, dass anstatt von zwei Klemmen 22, 24 eine einzige Klemme 40 vorgesehen ist, die den Stapel von Stromleitern 18 an zwei Stellen 42, 44 kraft- und/oder formschlüssig festhält. An den Stellen 42, 44 ist die Klemme 40 mit den Stromleitern 18 verschweißt, was durch die Schweißstellen 34, 36 angedeutet ist. Die Klemme 40 liegt mit einem Schenkel 46 an der Unterseite und mit den Schenkeln 48, 50 an der Oberseite des aus den Stromleitern 18 gebildeten Stapels an. Die Klemme 40 ist schmetterlingsförmig gestaltet. Auch sie steht unter einer Vorspannung, sodass nach einem Aufweiten der Klemme 40 der Stapel der Stromleiter 18 eingelegt werden kann und anschließend durch loslassen der Schenkel 48, 50 automatisch ein kraft- und/oder formschlüssiges Festhalten des Stapels der Stromleiter 18 erfolgt.

In der schematischen Darstellung der Figur 4 ist zu erkennen, dass zusätzlich zu dem Stapel der Stromleiter 18 eine Anschlussfahne 60 durch die Klemme 40 kraft- und/oder formschlüssig festgehalten wird. Beim Laserschweißvorgang wird somit auch die Anschlussfahne 60 mit den Stromleitern 18 und der Klemme 40 verschweißt. Anstelle der Klemme 40 könnten auch die zwei Klemmen 22, 24 verwendet werden.

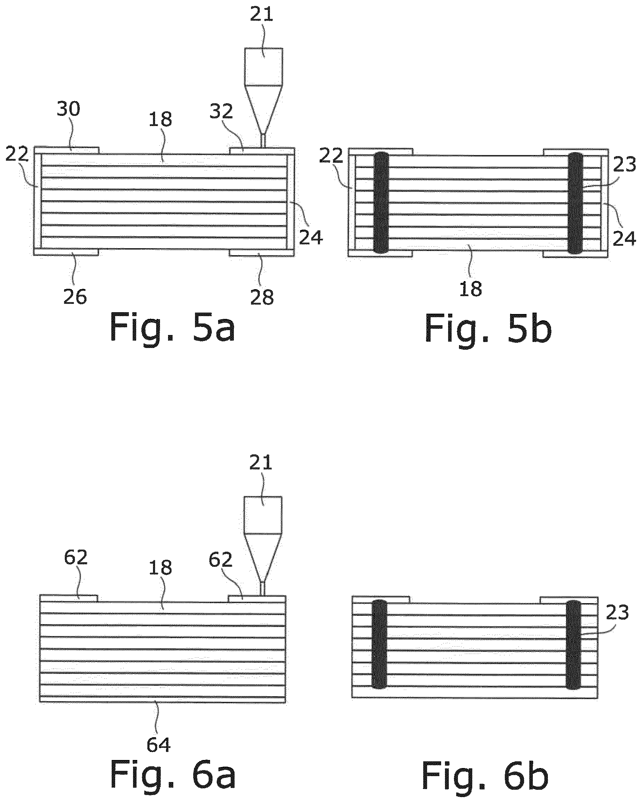

In Figur 5a ist eine Draufsicht auf die ersten Stromleiter 18 gezeigt. Die ersten Stromleiter 18 sind durch eine erste Klemme 22 und durch eine zweite Klemme 24 kraft- und/oder formschlüssig festgehalten. Die Klemmen 22, 24 greifen jeweils mit einem Schenkel 26, 28 an der Unterseite des aus den Stromleitern 18 gebildeten Stapels und mit jeweils einem Schenkel 30, 32 an der Oberseite des aus den Stromleitern 18 gebildeten Stapels an und drücken die Stromleiter 18 zusammen, sodass kein Luftspalt zwischen den einzelnen Stromleitern 18 verbleibt. Die Schenkel 26, 28, 30, 32 sind auf der Oberseite bzw. Unterseite des Stapels angeordnet und dienen als Opfermaterial für den Schweißprozess. Weiterhin ist in Figur 5a ein Laserschweißkopf 21 angedeutet.

Die Figur 5b zeigt die Darstellung gemäß der Figur 5a nach dem Schweißprozess. Hier ist zu erkennen, dass die einzelnen Stromleiter 18 durch eine Schweißverbindung 23 verbunden sind. Außerdem ist zu erkennen, dass die Schenkel 26, 28, 30, 32 durch eine Schweißverbindung 23 mit dem jeweils daran angrenzenden Stromleiter 18 verbunden sind. Dies bedeutet, dass die Klemmen 22, 24 nach dem Schweißen an dem aus den Stromleitern 18 gebildeten Stapel verbleiben.

Die Figur 6 entspricht im Wesentlichen der Figur 5a mit dem Unterschied, dass hier keine Klemmen vorgesehen sind. Auf der Oberseite des aus den Stromleitern 18 gebildeten Stapels ist lediglich ein Opfermaterial 62 aufgelegt. Der Stapel aus Stromleitern 18 liegt auf einer Auflage 64 auf. Die Auflage 64 kann aus einem Material, welches nicht mit den Stromleitern 18 laserverschweißbar ist, sein. Die Auflage kann aber auch Opfermaterial sein und mit dem Stapel verschweißt werden.

Die Figur 6b zeigt die Darstellung der Figur 6a nach dem Schweißvorgang, welcher mit dem Laser 21 durchgeführt wurde. Hier sind wiederum Schweißverbindungen 23 zu erkennen, die benachbarte Stromleiter 18 miteinander verbinden. Außerdem ist das Opfermaterial 62 mit dem darunterliegenden Stromleiter 18 durch eine Schweißverbindung 23 verbunden. Das Opfermaterial 62 verbleibt somit an dem Stapel.

Es versteht sich, dass in den Figuren 2 bis 6b anstelle der Stromleiter 18 die Stromleiter 20 vorgesehen sein könnten, die entsprechend kraft- und/oder formschlüssig festgehalten und verschweißt werden.

Im Folgenden werden die verschiedenen Verfahrensschritte zur Herstellung einer Batteriezelle geschildert.

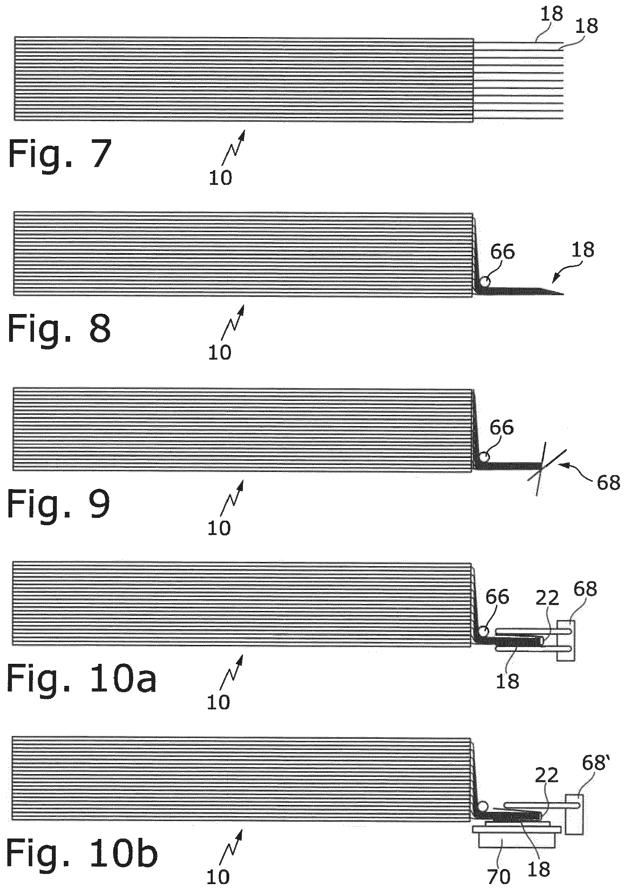

Die Figur 7 zeigt eine Seitenansicht einer Batteriezelle 10 mit gestapelten Anodenblättern, Kathodenblättern und dazwischen angeordneten Separatorblättern. In der Seitenansicht sind die Stromleiter 18 der Anodenblätter zu erkennen. Die folgenden Schritte können analog für die Stromleiter 20 der Kathodenblätter durchgeführt werden.

Ausweislich der Figur 8 werden die Stromleiter 18 mit einem Werkzeug 66, welches als Rollwerkzeug ausgebildet ist, nach unten gedrückt.

Figur 9 zeigt einen optionalen Verfahrensschritt. Hier wird mit einem Schneidewerkzeug 68 das freie Ende der Stromleiter 18 abgeschnitten, sodass eine einheitliche Länge entsteht.

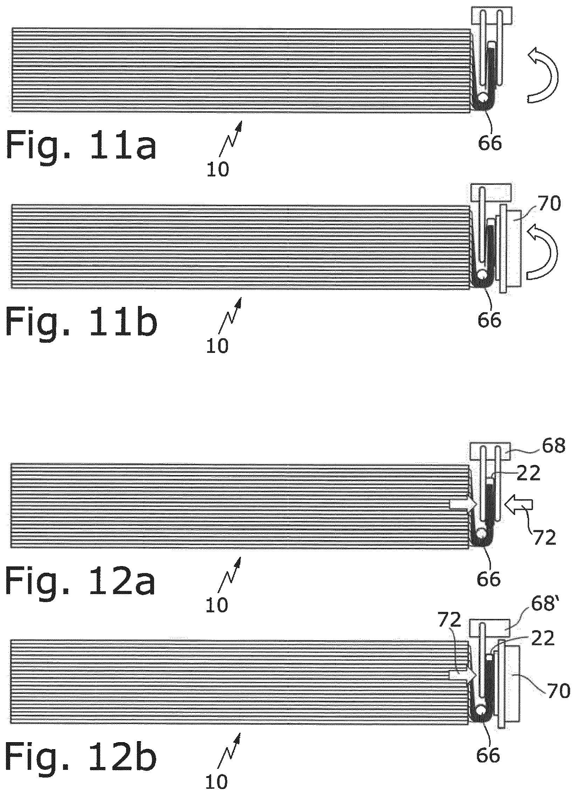

In der Ausführungsvariante gemäß der Figur 10a wird eine Klemme 22, die als Crimp ausgebildet sein kann, in einem Werkzeug 68 positioniert und anschließend über die freien Enden der Stromleiter 18 geschoben. In der Variante gemäß der Figur 10b ist die Klemme 22 an einem Batteriegehäusedeckel 70 angeordnet und wird mit einem Werkzeug 68' über den Stromleitern 18 positioniert. An den Verfahrensschritt gemäß Figur 10a schließt sich der Verfahrensschritt gemäß Figur 11a an. Dabei werden die Stromleiter 18 um das Werkzeug 66 herumgebogen.

Die Variante gemäß der Figur 11b schließt sich an den Verfahrensschritt gemäß Figur 10b anl. Hier werden die Stromleiter 18 gemeinsam mit dem Deckel 70 um das Werkzeug 66 gebogen.

Gemäß dem in der Figur 12a gezeigten Verfahrensschritt wird die Klemme 22 bzw. der Crimp zusammengedrückt, was durch die Pfeile 72 angedeutet ist. Dies erfolgt mit dem Werkzeug 68. Dieser Verfahrensschritt kann auch als Crimpen bezeichnet werden.
Bei der alternativen Verfahrensvariante gemäß Figur 12b werden die Stromleiter 18 ebenfalls in der Klemme 22 fixiert, indem die Klemme 22 zusammengedrückt wird. Nach den Verfahrensschritten gemäß Figur 12a, 12b sind die Stromleiter 18 formschlüssig in der Klemme 22 angeordnet.

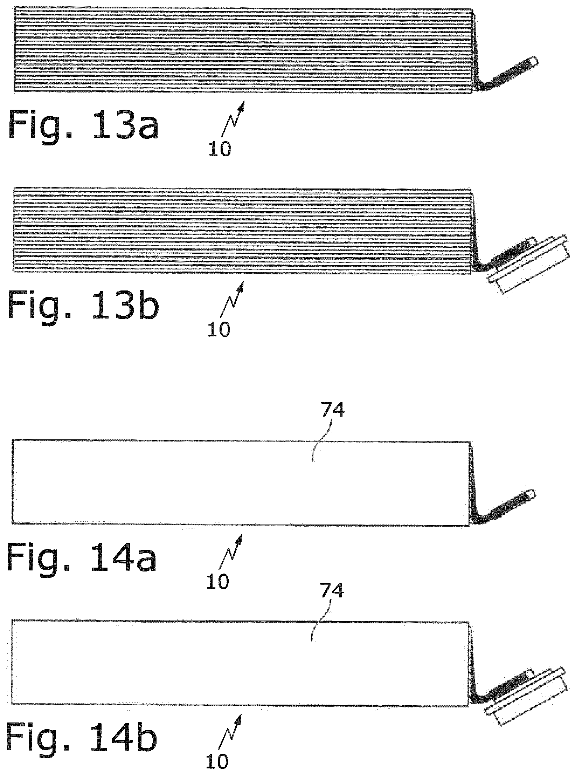

Gemäß der in den Figuren 13a und 13b dargestellten Verfahrensschritte wird das Werkzeug 68 bzw. 68' entfernt, sodass die von der Klemme 22 kraft- und/oder formschlüssig festgehaltenen Stromleiter 18 in eine "neutrale" Position gelangen.

Aus den Figuren 14a, 14b ergibt sich, dass die gestapelten Anodenblätter, Kathodenblätter und Separatorblätter nun mit einer Hülle 74 umgeben werden.

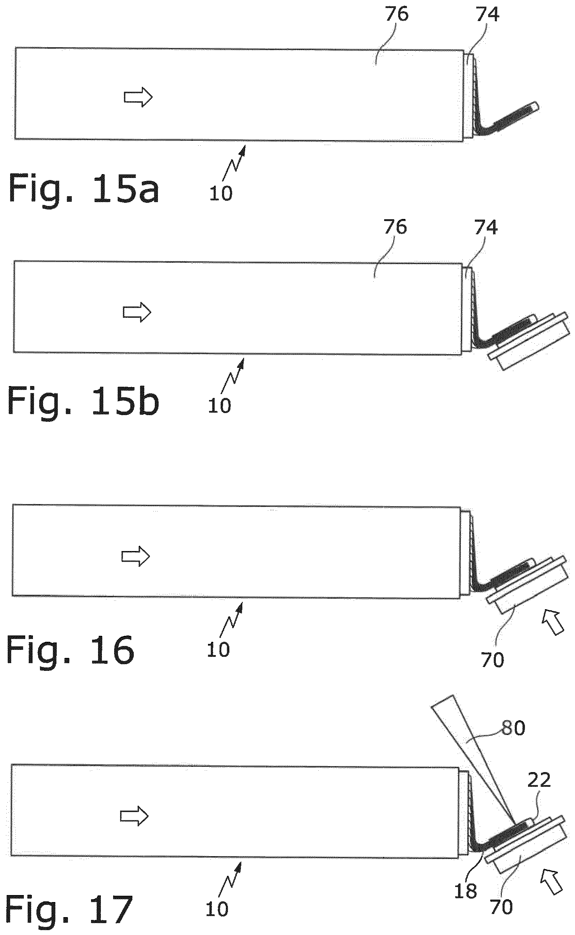

Anschließend wird ausweislich der Figuren 15a, 15b ein Gehäuse 76 über die Hülle 74 geschoben.

Bei der Verfahrensvariante gemäß der Figuren 9a bis 15a wird nun der Gehäusedeckel 70 an der Klemme 22 angeordnet (siehe Figur 16a).

In der Figur 17 ist gezeigt, dass nun die Klemme 22 als Opfermaterial mit dem Stapel aus Stromleitern 18 mittels eines Laserstrahls 80 verschweißt wird. Die Schweißung kann dabei durch die Klemme 22 hindurch bis zum Deckel 70 erfolgen, sodass auch dieser durch den Schweißprozess mit den Stromleitern 18 verbunden wird.

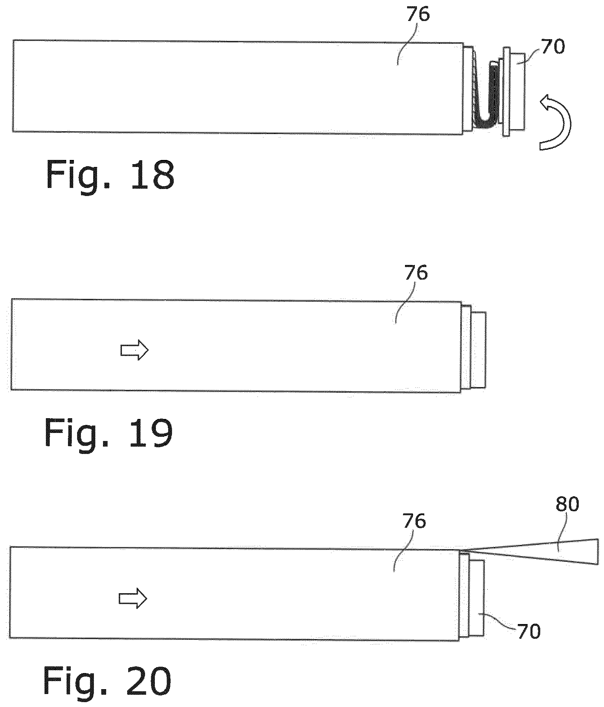

Gemäß der Figur 18 werden die Stromleiter 18 mit dem Deckel 70 nun so gebogen, dass der Deckel 70 unter vollständigem Einschieben des Stapels aus Anodenblättern, Kathodenblättern und Separatorblättern auf dem Gehäuse 76 positioniert werden kann, wie dies in der Figur 19 gezeigt ist. Ausweislich der Figur 20 wird der Deckel 70 mittels eines Laserstahls 80 am dem Gehäuse 76 befestigt.

## Patentansprüche

1. Verfahren zur Herstellung einer Batteriezelle (10) mit den Verfahrensschritten:
a. Bilden eines Stapels aus Anodenblättern (12), einem oder mehreren Separatorblättern (14) und Kathodenblättern (16), wobei den Anodenblättern (12) erste Stromleiter (18) und den Kathodenblättern (16) zweite Stromleiter (20) zugeordnet sind;
b. Anordnen eines Opfermaterials (62) auf der Oberseite und/oder der Unterseite eines Stapels von ersten Stromleitern (18) und/oder des Stapels von zweiten Stromleitern (20);
c. Verschweißen des Opfermaterials (62) mit den ersten und/oder zweiten Stromleitern (18, 20) mittels eines Lasers.

2. Verfahren nach Anspruch 1, **gekennzeichnet durch** kraft- und/oder formschlüssiges Festhalten der ersten Stromleiter (18) und/oder der zweiten Stromleiter (20) jeweils mit zumindest einer Klemme (22, 24, 40) und Verschweißen der zumindest einen Klemme (22, 24, 40) mit den von dieser kraft- und/oder formschlüssig festgehaltenen Stromleitern (18, 20) mittels des Lasers, wobei die Klemme (11, 24, 40) zumindest teilweise das Opfermaterial ist.

3. Verfahren nach Anspruch 1 oder 2, **dadurch gekennzeichnet, dass** die ersten und/oder zweiten Stromleiter (18, 20) mittels Crimpen mit dem Opfermaterial (62) verbunden werden.

4. Verfahren nach einem der vorhergehenden Ansprüche, **dadurch gekennzeichnet, dass** eine Anschlussfahne (60) im Bereich des Opfermaterials angeordnet wird, insbesondere mit den ersten oder zweiten Stromleitern (18, 20) kraft- und/oder formschlüssig festgehalten wird, und gemeinsam mit dem Opfermaterial, insbesondere der Klemme (22, 24, 40), und den jeweiligen Stromleitern (18, 20) verschweißt wird.

5. Verfahren nach einem der vorhergehenden Ansprüche, **dadurch gekennzeichnet, dass** der Laser und der Stapel während des Schweißens relativ zueinander bewegt werden, insbesondere kreisförmig bewegt werden.

6. Verfahren nach einem der vorhergehenden Ansprüche, **dadurch gekennzeichnet, dass** im Bereich der Schweißstelle während des Schweißens gekühlt wird.

7. Verfahren nach einem der vorhergehenden Ansprüche, **dadurch gekennzeichnet, dass** der Stapel aus mehr als 50 Blättern gebildet wird.

8. Verfahren nach einem der vorhergehenden Ansprüche, **dadurch gekennzeichnet, dass** sowohl die Stromleiter (18) der Anodenblätter (12) als auch die Stromleiter (20) der Kathodenblätter (16) an zumindest zwei Stellen geschweißt werden.

9. Verfahren nach einem der vorhergehenden Ansprüche, **dadurch gekennzeichnet, dass** der Laserschweißprozess überwacht wird.

10. Batteriezelle (10) mit einem Stapel, der aus Anodenblättern (12), Kathodenblättern (16) und einem oder mehreren Separatorblättern (14) gebildet ist, wobei den Anodenblättern (12) erste Stromleiter (18) und den Kathodenblättern (16) zweite Stromleiter (20) zugeordnet sind, **dadurch gekennzeichnet, dass** im Bereich der ersten Stromleiter (18) und/oder der zweiten Stromleiter (20) zumindest ein Opfermaterial (62) vorgesehen ist und das Opfermaterial (62) mit den Stromleitern (18, 20) laserverschweißt ist.

11. Batteriezelle nach Anspruch 10, **dadurch gekennzeichnet** durch, dass die ersten Stromleiter (18) und/oder die zweiten Stromleiter (20) durch zumindest eine Klemme (22, 24, 40) kraft- und/oder formschlüssig festgehalten sind.

12. Batteriezelle nach einem der vorhergehenden Ansprüche 11 bis 13, **dadurch gekennzeichnet, dass** eine Anschlussfahne (60) mit den Stromleitern (18, 20) der Anodenblätter (12) oder der Kathodenblätter (16) verschweißt ist.

13. Batteriezellen nach einem der Ansprüche 10 bis 12, **dadurch gekennzeichnet, dass** ein Batteriegehäusedeckel mit den ersten und/oder zweiten Stromleitern (18, 20) verschweißt ist.
